# EUROPEAN PATENT SPECIFICATION

(11) **EP 0 441 030 B1**
(45) Date of publication and mention of the grant of the patent: **09.10.1996**
(21) Application number: 90311778.6
(22) Date of filing: 26.10.1990
(51) Int. Cl.: G11B 19/22, G11B 19/20

(54) **Motor brake circuit for use in a magnetic disk drive system**
Motorbremsschaltung zum Gebrauch in einem magnetischen Plattenantriebssystem
Circuit de freinage de moteur à utiliser dans un système d'entraînement de disque magnétique

(30) Priority: 06.02.1990 US 475704
(43) Date of publication of application: 14.08.1991
(73) Proprietor: SEAGATE TECHNOLOGY INTERNATIONAL, Georgetown, Grand Cayman Island (KY)
(72) Inventor: Palm, William A., Minnetonka, Minnesota 55345 (US)
(74) Representative: Sturt, Clifford Mark

(56) References cited:
- EP-A- 0 301 737
- FR-A- 2 470 506
- FR-A- 2 597 250
- US-A- 4 417 288
- PATENT ABSTRACTS OF JAPAN vol. 5, no. 73 (P-061)(745) 15 May 1981 ; & JP-A-56 022 254
- IBM TECHNICAL DISCLOSURE BULLETIN, vol. 1, no. 32, June 1989, New York, US, pp. 363-365; 'Disk Drive DC Motor Braking Circuits'
- PATENT ABSTRACTS OF JAPAN vol. 4, no. 107 (P-21)(589) 31 July 1980 ; & JP-A-55 064 657
- PATENT ABSTRACTS OF JAPAN vol. 12, no. 114 (P-688) 12 April 1988 ; & JP-A-62 243 162
- PATENT ABSTRACTS OF JAPAN vol. 11, no. 237 (E-528) 4 August 1987 ; & JP-A-62 048 278
- PATENT ABSTRACTS OF JAPAN vol. 11, no. 27 (E-474) 27 January 1987 ; & JP-A-61 196 776

## Description

The present invention relates to a motor brake circuit for use in a magnetic disk drive system for braking a spindle motor of the system upon loss of supplied power.

Magnetic disk drive systems have become widely accepted in the computer industry as a cost effective form of data storage. In a conventional magnetic disk drive system, a magnetic disk rotates at high speed while a magnetic read/write head "flies" slightly over the surface of the rotating disk. The magnetic disk is carried by a spindle drive motor. The magnetic read/ write head is suspended over the disk on a spring loaded support arm. As the disk rotates at high speed, the aero-dynamic properties of the magnetic head provide a lifting force which allows the head to glide over the disk surface on a cushion of air. The height of the magnetic read/write head over the disk surface is primarily a function of the rate of disk rotation, the aero-dynamic properties of the magnetic head assembly (or "slider") and the force provided by the spring loaded support arm.

Two of the most critical periods in determining magnetic head life occur during "take off" and "landing". Prior to operation, the head rests on an inner track or "landing zone" of the disk. As the disk begins to rotate from an initial, stopped position, the magnetic head is dragged along the surface of the disk. Once the disk reaches sufficient speed, the aero-dynamic lift begins to force the magnetic head assembly away from the disk surface, i.e. the head "takes off". The spindle drive motor provides sufficiently large acceleration so that the magnetic head flies after only a very few rotations of the magnetic disk.

During shut down of the disk drive system, the magnetic read/write head must "land" upon the surface of the magnetic disk. This landing typically occurs in the landing zone along the inner radius of the magnetic disk surface. After power to the magnetic disk drive spindle motor is shut off, momentum continues to carry the magnetic disk through its rotation. Various friction sources slowly reduce the speed of rotation of the magnetic disk. As the disk rotation slows, the aero-dynamic lifting force is reduced and the magnetic read/write head assembly contacts the disk surface in the landing zone area. Once the magnetic head contacts the disk surface, the head is dragged across the surface as momentum continues the magnetic disk rotation.

Magnetic read/write heads used in modern day disk drive systems are typically extremely small and delicate thin film magnetic heads. The dragging associated with take offs and particularly with landings as described above is a primary source of magnetic head wear. The landing process described above typically produces a longer dragging period for the magnetic head. The prior art has attempted to limit the length of the dragging period by braking the rotation of the spindle motor.

One such design is shown in U. S. Patent No. 4,658,308 entitled "Method and Apparatus for Retracting Head and Braking Motor of a Disk Drive Device". This patent shows circuitry for electrically shorting out the windings in a magnetic disk drive spindle motor following a pre-determined time delay after power loss and retraction of the magnetic head onto the landing zone area of the disk surface. Electricaly shorting the coils causes the spindle rapidly to stop rotating. Once the motor windings are shorted out, the disk drive rapidly stops spinning and the magnetic head loses lift and drops to the disk surface.

Due to size constraints, however, the spindle motor is designed to be as small as possible. This limits the size of the motor windings. Small windings cannot carry large electrical currents without heating and eventually melting. The electrical shorting of the windings of the disk spindle motor results in high surge currents due to back EMF induced in the motor coils by the momentum of the rotating disk. (Back EMF is an effect in which an electric motor acts as an electric generator. In the case of a disk drive, the spinning disk causes electric current to flow in the motor windings). These high surge currents can permanently damage the spindle drive motor by causing one or more of the windings to melt and form an electrical open circuit.

Other prior art approaches to disk drive braking have used mechanical devices, such as normally closed electric relays held in the open position by the power supply in the magnetic storage system. Upon loss of power, these relays return to their closed positions and electrically short out the spindle motor windings. This can also cause large surge currents, which can damage the motor windings. Mechanical relays have a number of additional design problems, including large power draw during operation, large size, high cost and inherent reliability limitations problematic of electromechanical components.

Upon power-up of a storage system, it is desirable to rapidly re-set the circuitry used electrically to short the windings of the spindle drive motor. Failure to re-set quickly the brake circuitry causes either severe loading of the power supply used to drive the spindle motor or an extended delay period during which the braking circuitry slowly releases the spindle motor.

Patent Abstracts of Japan, Vol. 5 No. 73 (p-061) (745) dated 15th May 1981 discloses a braking apparatus in which dynamic braking is divided into two stages; firstly motor coils are shorted through resistances as the disk rotates and secondly motor coils are shorted without resistances after the speed of rotation has fallen.

US-A-4 417 288 discloses a rotation control device for a magnetic disk drive apparatus which provides electrical regenerative working of the apparatus prior to and continuously with actuation of an electromechanical braking system, once power is cut off to the apparatus.

It is an object of the present invention to provide an arrangement for braking the spindle motor in a magnetic disk drive system, which avoids the disadvantages mentioned above.

In accordance with one aspect of the present invention, there is provided apparatus for braking a storage disk of a storage system which includes a head and a spindle drive motor having coil means and a spindle drive shaft coupled to the disk, coil drive means coupled to the coil means for selectively providing power to the coil means by periodically electrically connecting the coil means to a power source to cause the spindle drive shaft to rotate, controller means for selectively supplying a control signal to the coil drive means, which energises the coil drive means and selectively couples the coil drive means to the power source, and means for applying a brake signal to the coil drive means to effect dynamic braking of the spindle drive shaft by electrically shorting the coil means, characterised in that the brake signal applying means is responsive to the speed of rotation of the spindle drive motor falling below a predetermined threshold level which is predetermined to be between a first level representative of a maximum surge current that will not damage the coil means and a second level representative of a minimum disk rotation speed at which the head will fly with respect to the disk, and there is provided means for holding the coil means in an electrically shorted condition to maintain dynamic braking upon loss of power, and means for re-setting the holding means upon a recovery of system power to remove application of the brake signal to the coil drive means and allow the energisation of the coil means to rotate the spindle drive shaft.

In accordance with another aspect of the present invention, there is provided a method of braking a storage disk of a storage system which includes a head and a spindle drive motor having coil means and a spindle drive shaft coupled to the disk the method comprising electrically shorting the coil means to dynamically brake the spindle drive shaft, characterised by detecting the rotational speed of the shaft electrically, and upon a power voltage removal, enabling a brake signal for dynamic braking when the speed of rotation is below a predetermined threshold level which is predetermined to be between a first level representative of a maximum surge current which would not damage the coil means upon shorting, and a second level representative of a minimum disk rotation speed which would enable the head to fly with respect to the disk, holding the brake signal to maintain dynamic braking, and re-setting the holding upon a recovery of power to remove the brake signal and terminate dynamic braking.

The invention thus provides an inexpensive and reliable means of braking the spindle motor in a magnetic drive system.

As described below, the present invention provides an electrical short across the windings of a spindle motor, which causes the motor to stop quickly.

A back EMF voltage level trigger senses the back EMF generated in the motor coils by the rotating drive spindle during shut-down and triggers the coil shorting means when the back EMF has reached a pre-determined trigger level. This trigger level is selected to be sufficiently low that the surge current through the electrically shorted coil will not harm the coil. The trigger level is further set high enough so that the magnetic head of the storage system does not drag along the surface of the disk. These two criteria set upper and lower limits for the trigger level.

The invention as described thus minimises surge current through the electrically shorted motor coil due to the back EMF. It is, therefore, possible to brake the spindle drive motor so that the motor coil is subjected to reduced surge current without increasing the time that the magnetic read/write head drags along the landing zone area of the magnetic disk.

Preferably, the apparatus comprises a charge transfer circuit triggered by a trigger circuit to short the spindle motor coil, a holding capacitor and a re-set circuit. The transfer circuit may then be triggered by the back EMF voltage level trigger to transfer charge onto the holding capacitor. The holding capacitor may hold a voltage on the gates of FETs used in a motor drive circuit. This electrically shorts the spindle motor coil. Upon power-up of the magnetic storage system, the re-set circuit may be employed to draw charge rapidly away from the holding capacitor, and thereby electrically open the circuit through the spindle motor coil.

The invention may thus provide a more reliable and predictable arrangement for quickly stopping the spindle motor during a power loss interval and may eliminate the bulky, high power consumption electro-mechanical relay used in the prior art.

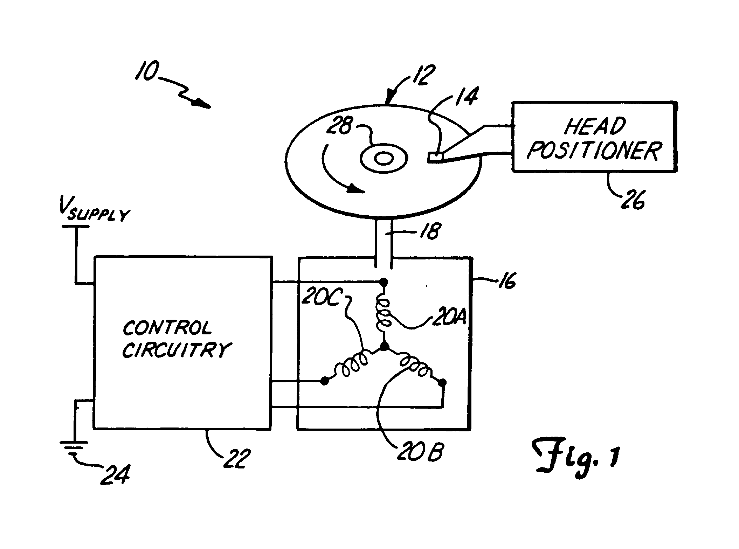

The invention is described further, by way of example, with reference to the accompanying drawings, in which:-
Figure 1 is a schematic diagram of a magnetic storage system according to the present invention
showing a spindle motor and controller; Figure 2 is a diagram of one embodiment of control circuitry of the system of Figure 1 providing a motor brake circuit in accordance with the present invention;
and Figure 3 is a diagram of another embodiment of control circuitry of the system of Figure 1 providing a motor brake circuit in accordance with the present

invention. Figure 1 is a diagram of a magnetic storage system 10. The magnetic storage system 10 includes a magnetic disk 12 and a magnetic read/write assembly 14. The magnetic disk 12 is connected to a spindle drive motor 16 through a spindle 18. The spindle drive motor 16 includes coils 20A, 20B and 20C. The coils 20A, 20B and 20C are connected to control circuitry 22. The control circuitry 22 is connected to a power supply labelled v_{supply} and to electrical ground 24. The magnetic read/write head assembly 14 is connected to a head positioner 26.

In operation, the control circuitry 22 selectively applies control voltatges to the coils 20A, 20B and 20C in the spindle drive motor 16. This causes the spindle 18 and the disk 12 to rotate. At sufficiently high speeds, the rotation of the disk 12 causes the magnetic head assembly 14 to lift off the disk surface due to the aero-dynamic properties of the head assembly 14. After lift off, the magnetic head assembly 14 flies over the the surface of the disk 12 as the disk 12 rotates. The head positioner assembly 26 is used to position the magnetic head 14 radially over the disk 12. The magnetic head 14 is used to selectively magnetise the surface of the magnetic disk 12 so that digital information is recorded. The magnetic head 14 is also used to read back recorded information from the surface of the disk 12. As the disk 12 rotates below the magnetic head 14, the magnetic flux through the magnetic head 14 is changed. This changing flux is sensed and converted into digital information. The magnetic disk 12 includes a landing zone 28, typically around the inner diameter of the magnetic disk 12. The magnetic read/write head 14 is stored in the landing zone 28 when the magnetic disk 12 is not rotating. A specific area of the disk 12 is designated as the landing zone because take offs and landings of the magnetic head 14 would damage any information stored in such an area.

During shut down of the magnetic storage system 10, or loss of power, the power supply voltage applied to the V_{supply} drops to zero. At this time, the head positioner 26 moves the magnetic head 14 to the landing zone 28. Using the present invention, a back EMF voltage generated in the coils 20A, 20B and 20C by the continued rotation of the disk 12 is sensed by the control circuitry 22. When this voltage level reaches a pre-determined threshold, the coils 20A, 20B and 20C are electrically shorted. This shorts out the back EMF voltage and causes the disk 12 rapidly to slow its rotation. When the disk 12 slows its rotation, the magnetic head 14 drops to the surface of the disk 12 at the landing zone 28 because the aero-dynamic lift drops to zero. An upper limit on the trigger voltage used to trigger the motor braking sequence is determined by the maximum surge current that the coils 20A, 20B and 20C can carry without being damaged. This limit is dependent on the electrical characteristics of the coil and the energy of the back EMF voltage. A lower limit on the trigger voltage is set according to the minimum rate at which the magnetic read/write head 14 will fly over the surface of the disk 12. If the trigger voltage level is set too low, the head 14 will drop to the surface of the disk 12 while the disk 12 continues to rotate, which damages the delicate structure of the magnetic head assembly. In accordance with the present invention, these two design criteria set an optimal voltage range for the back EMF trigger voltage level which depends upon the characteristics of the magnetic storage system.

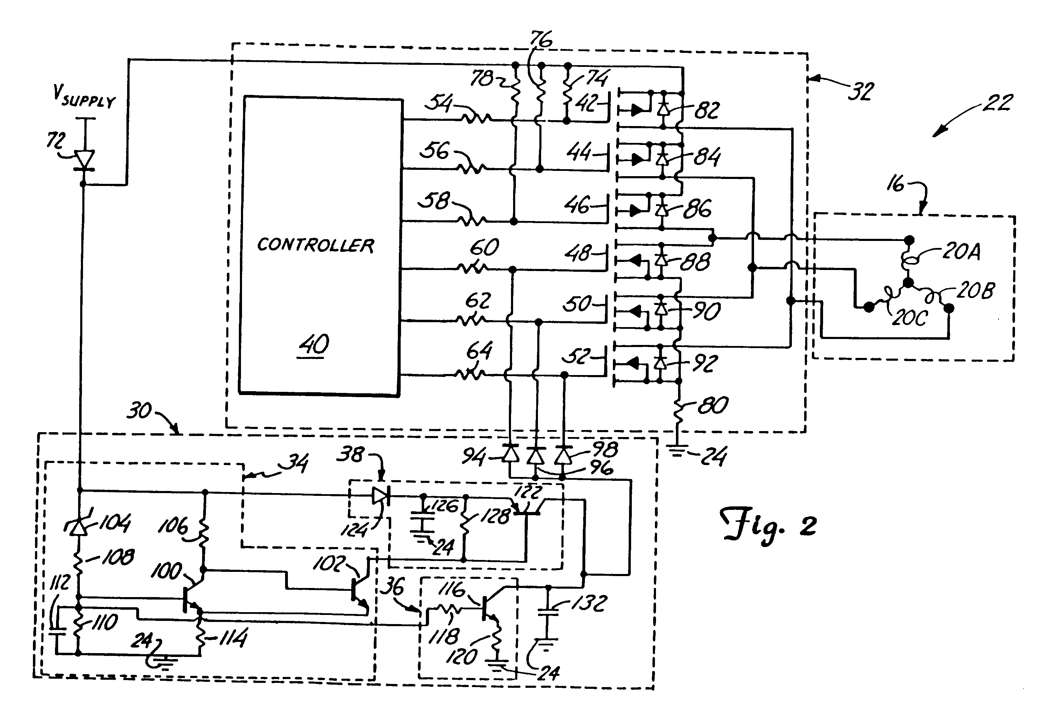

Figure 2 shows one embodiment of the control circuitry 22 for braking the spindle drive motor 16 in accordance with the present invention. A braking circuit 30 is connected to a control circuit 32. The control circuit 32 is connected to the spindle drive motor 16 for rotating the spindle 18 and the magnetic disk 12. The braking circuit 30 includes a trigger circuit 34, a re-set circuit 36 and a transfer circuit 38.

The control circuit 32 includes a controller 40; field effect transistors (FETs) 42, 44, 46, 48, 50 and 52; resistors 54, 56, 58, 60, 62 and 64; resistors 74, 76, 78 and 80; and diodes 82, 84, 86, 88, 90 and 92. The gates of the FETs 42, 44 and 46 are connected to the controller 40 through the resistors 54, 56 and 58 respectively. The gates of the FETs 48, 50 and 52 are connected to the controller 40 through the resistors 60, 62 and 64, respectively. The gates of the FETs 42, 44 and 46 are connected to the power supply V_{supply} through a diode 72 and the resistors 74, 76 and 78, respectively.

The drains of the FETs 42, 44 and 46 are connected to the power supply voltage connection V_{supply} through the diode 72. The sources of the FETs 42, 44 and 46 are connected to the coils 20B, 20C and 20A, respectively, of the motor 16. The drains of the FETs 48, 50 and 52 are connected to the coils 20A, 20C and 20B, respectively, of the spindle drive motor 16. The sources of the FETs 48, 50 and 52 are connected to the electrical ground 24 through a resistor 80. The diodes 82, 84, 86, 88, 90 and 92 are connected between the drain and the source of the FETs 42, 44, 46, 48, 50 and 52, respectively.

In operation, the controller 40 sends control signals to the gates of the FETs 42; 44, 46, 48, 50 and 52 so that power is selectively applied to the coils 20A, 20B and 20C of the spindle drive motor 16. For example, when the gates of the FETs 42 and 50 are at a high voltage level from the controller 40, an electrical voltage is applied through the coils 20B and 20C, which completes an electrical circuit between the power supply and the electrical ground 24. By properly sequencing the voltages applied to the gates of the FETs 42, 44, 46, 48, 50 and 52, the controller 40 causes the spindle 18 and the disk 12 to rotate.

The braking circuit 30 is connected to the gates of the FETs 48, 50 and 52 through diodes 94, 96 and 98, respectively. The diodes 94, 96 and 98 isolate the braking circuit 30 from the control circuit 32. The trigger circuit 34 of the braking circuit 30 comprises bipolar junction transistors (BJTs) 100 and 102, a zener diode 104, resistors 106, 108 and 110, and a capacitor 112. The collector of the BJT 100 is connected to the cathode of the zener diode 104 through the resistor 106. The base of the BJT 100 is connected to the anode of the zener diode 104 through the resistor 108 and to the electrical ground 24 through the resistor 110 and the capacitor 112. The emitter of the BJT 100 is connected to the emitter of the BJT 102 and to the electrical ground 24 through the resistor 114. The base of the BJT 102 is connected to the collector of the BJT 100.

The re-set circuit 36 includes a BJT 116 and resistors 118 and 120. The base of the BJT 116 is connected to the base of the BJT 100 through the resistor 118. The emitter of the BJT 116 is connected to the electrical ground 24 through a resistor 120.

The transfer circuit 38 includes a BJT 122, a diode 124, a capacitor 126 and a resistor 128. The emitter of the BJT 122 is connected to the cathode of the diode 124. The anode of the diode 124 is connected to the cathode of the zener diode 104. The emitter of the BJT 122 is connected to the electrical ground 24 through the capacitor 126. The emitter of the BJT 122 is connected to the base of the BJT 122 through a resistor 128. The base of the BJT 122 is connected to the collector of the BJT 102 through a resistor 130.

The cathode of the zener diode 104 connects to the power supply through the diode 72. The collector of the BJT 122 and the collector of the BJT 116 connect to the gates of the FETs 48, 50 and 52 through the diodes 94, 96 and 98, respectively. The control circuit 32 also includes a holding capacitor 132. The collector of the BJT 116, and the collector of the BJT 122 are connected to the electrical ground 24 through the holding capacitor 132.

In operation, the trigger circuit 34 senses the voltage across the coils 20A, 2B and 20C through the circuit completed by the diodes 82, 84, 86, 88, 90 and 92. A trigger voltage level is set at the base of the BJT 100 by the zener diode 104 and the resistors 108 and 110. The BJTs 100 and 102 are connected to form a Schmitt trigger. The capacitor 112 is used as a filter to smooth the signal from the motor windings 20A, 20B and 20C. The capacitor 126 stores charge to be transferred.

The BJT 122 in the charge transfer circuit 38 is triggered by the trigger circuit 34 to transfer charge from the capacitor 126 to the holding capacitor 132. When the holding capacitor 132 is charged, a voltage is applied to the gates of the FETs 48, 50 and 52 so that the drain - source connections for the FETs 48, 50 and 52 are held open. This provides a connection between the coils 20A, 20B and 20C and the electrical ground 24 through the resistor 80. The holding capacitor 132 holds its charge for an extended period because there is very little current drain through the controller 40 and the FETs 48, 50 and 52 do not draw substantial current.

The trigger voltage level provided to the base of the BJT 100 by the zener diode 104 and the resistors 108 and 110 should be set within certain limits. The trigger voltage should be large enough to indicate that the magnetic head is not dragging along the surface of the disk 12 and low enough that electrical shorting of the coils 20A, 20B and 20C does not damage the motor 16. This trigger voltage will vary between disk systems and can be found by observing the head while measuring the back EMF voltage.

Upon power-up, the BJT 116 receives power from the power supply. The re-set circuit 36 draws charge away from the holding capacitor 132, which removes the voltage applied to the FETs 48, 50 and 52 from the braking circuit 30. As a result, the coils 20A, 20B and 20C are powered by the controller 40 through the FETs 42, 44, 46, 48, 50 and 52. The re-set circuit 36 quickly releases the short circuit of the coils 20A, 20B and 20C, which allows the disk 12 quickly to reach operating speed so that the magnetic head 14 flies over the surface of the disk 12.

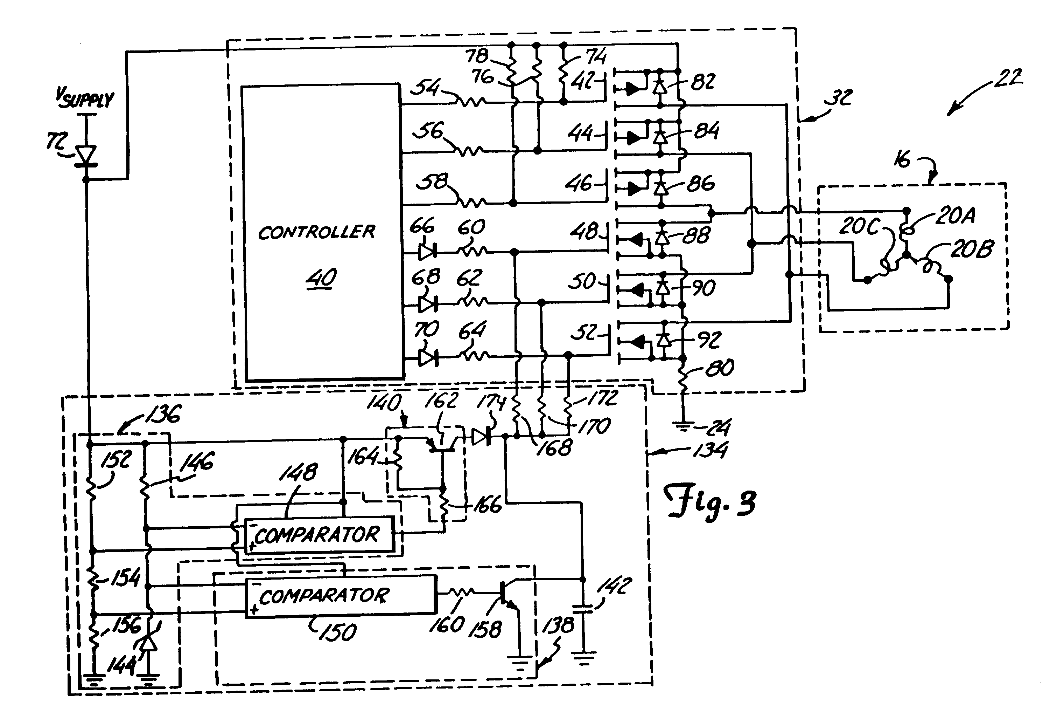

Figure 3 shows an alternative embodiment of the control circuitry 22, which uses the same control circuit 32 and spindle drive motor 16 as shown in Figure 2. In Figure 3, the circuitry 22 employs an alternative braking circuit 134 in accordance with the present invention. The braking circuit 134 includes a trigger circuit 136, a re-set circuit 138, a charging circuit 140 and a holding capacitor 142.

The trigger circuit 136 includes a zener diode 144, a resistor 146, a comparator 148 and resistors 152, 154 and 156. The zener diode 144 and the resistor 146 develop a trigger voltage level. This voltage level is applied to the negative (-) inputs of the comparator 148 and a comparator 150 of the re-set circuit 138. The comparators 148 and 150 include positive and negative inputs, an output and a power connection. The positive (+) inputs of the comparators 148 and 150 are connected to the coils 20A, 20B and 20C of the spindle drive motor 16 through the resistors 152, 154 and 156 and the diodes 82, 84, 86, 88, 90 and 92 of the control circuit 32. The resistors 152, 154 and 156 form a resistor network to develop the trigger voltage level.

The re-set circuit 138 includes a BJT 158, a resistor 160 and the comparator 150. The base of the BJT 158 is connected to the output of the comparator 150 through the resistor 160. The collector of the BJT 158 is connected to the holding capacitor 142.

The charging circuit 140 includes a BJT 162 and resistors 164 and 166. The emitter and base of the BJT 162 are connected together by the resistor 164. The emitter of the BJT 162 connects to the coils 20A, 20B and 20C of the spindle drive motor 16 through the diodes 82, 84, 86, 88, 90 and 92. The base of the BJT 162 is connected to the output of the comparator 148 through the resistor 166. The collector of the BJT 162 is connected to the gates of the FETs 48, 50 and 52 through resistors 168, 170 and 172, respectively, and a blocking diode 174.

In operation, the circuit of Figure 3 works in a manner similar to the circuit of Figure 2. The comparator 148 of the trigger circuit 136 compares the voltage from the coils 20A, 20B and 20C with a trigger voltage level and activates the charging circuit 140 when the back EMF from the spindle drive motor 16 drops below the trigger voltage level. The charging circuit 140 charges the holding capacitor 142, which applies a voltage to the gates of the FETs 48, 50 and 52. This electrically shorts the coils 20A, 20B and 20C to ground 24 through the resistor 80. The holding capacitor 142 holds a voltage on the gates of the FETs 48, 50 and 52.

Upon re-set, the power supply voltage returns to its value of V_{supply}, and power is applied to the braking circuit 144 and the control circuit 32. The comparator 150 compares a reference voltage developed by the zener diode 144 and the resistor 156 and triggers the BJT 158 of the re-set circuit 138. When the comparator 150 applies a current to the base of the BJT 158, current is drawn by the collector of the BJT 158, and the capacitor 142 is rapidly discharged. This removes the holding voltage from the gates of the FETs 48, 50 and 52 and allows the controller 40 to apply power to the coils 20A, 20B and 20C of the spindle drive motor 16.

The present invention provides a reliable means of braking the drive spindle motor in a magnetic disk drive system. Voltage thresholds are compared to the back EMF voltage developed by the coils in the spindle motor upon loss of power to the disk drive system. The rotation of the drive spindle motor is allowed to coast down to a speed where an electrical short across the drive coils will not cause a current spike to pass through the drive coils which could damage them. The trigger voltage level is selected so that the magnetic head does not drag along the surface of the disk, but rather suddenly drops from its "flying" position to the surface of the disk when the braking circuit is applied. The invention includes a re-set circuit for rapidly re-setting the drive coils upon power-up. Because the present invention limits the surge current through the drive coils, smaller spindle drive motors are now possible without dragging the magnetic head along the surface of the magnetic disk upon loss of power.

## Claims

1. Apparatus for braking a storage disk (12) of a storage system which includes a head (14) and a spindle drive motor (16) having coil means (20A, 20B, 20C) and a spindle drive shaft (18) coupled to the disk (12), coil drive means (42 to 78) coupled to the coil means (20A, 20B, 20C) for selectively providing power to the coil means by periodically electrically connecting the coil means to a power source to cause the spindle drive shaft to rotate, controller means (40) for selectively supplying a control signal to the coil drive means, which energises the coil drive means and selectively couples the coil drive means to the power source, and means (30;134) for applying a brake signal to the coil drive means to effect dynamic braking of the spindle drive shaft by electrically shorting the coil means, characterised in that the brake signal applying means (30; 134) is responsive to the speed of rotation of the spindle drive motor falling below a predetermined threshold level which is predetermined to be between a first level representative of a maximum surge current that will not damage the coil means and a second level representative of a minimum disk rotation speed at which the head will fly with respect to the disk, and there is provided means (132, 142) for holding the coil means in an electrically shorted condition to maintain dynamic braking upon loss of power, and means (36; 138) for re-setting the holding means (132; 142) upon a recovery of system power to remove application of the brake signal to the coil drive means and allow the energisation of the coil means to rotate the spindle drive shaft.

2. Apparatus according to Claim 1, wherein the coil drive means includes transistor means (42 to 52).

3. Apparatus according to Claim 1 or 2, wherein the brake signal applying means (134) includes a voltage comparator (148).

4. Apparatus according to Claim 1 or 2, wherein the brake signal applying means (30) includes a schmitt trigger circuit (100, 102).

5. Apparatus according to Claim 1, 2, 3 or 4, wherein the holding means includes a capacitor (132, 142).

6. Apparatus according to Claim 5, wherein the brake signal applying means includes means (38, 140) for dumping charge into the holding capacitor (132, 142).

7. Apparatus according to Claim 5 or 6, wherein the holding means re-setting means includes means (116, 158) for drawing charge from the holding capacitor (132, 142).

8. Apparatus according to Claim 7, wherein the charge drawing means includes a transistor (116, 158).

9. Apparatus according to any preceding claim, wherein the brake signal applying means (30; 34) is responsive to the voltage across the coil means (20A, 20B, 20C), the voltage representative of the speed of rotation of the spindle drive motor (16).

10. A method of braking a storage disk (12) of a storage system which includes a head (14) and a spindle drive motor (16) having coil means (20A, 20B, 20C) and a spindle drive shaft coupled to the disk (12), the method comprising electrically shorting the coil means to dynamically brake the spindle drive shaft, characterised by detecting the rotational speed of the shaft electrically, and upon a power voltage removal, enabling a brake signal for dynamic braking when the speed of rotation is below a predetermined threshold level which is predetermined to be between a first level representative of a maximum surge current which would not damage the coil means upon shorting, and a second level representative of a minimum disk rotation speed which would enable the head to fly with respect to the disk, holding the brake signal to maintain dynamic braking, and re-setting the holding upon a recovery of power to remove the brake signal and terminate dynamic braking.

## Patentansprüche

1. Vorrichtung zum Bremsen einer Speicherplatte (12) eines Speichersystems, das einen Kopf (14) und einen Spindelantriebsmotor (16) mit Wicklungsteilen (20A, 20B, 20C) und mit einer mit der Platte (12) gekoppelten Spindelantriebswelle (18), eine Wicklungsansteuereinrichtung (42 bis 78), die mit den Wicklungsteilen (20A, 20B, 20C) gekoppelt ist, um selektiv Leistung an die Wicklungsteile dadurch zu liefern, daß die Wicklungsteile periodisch elektrisch mit einer Leistungsquelle verbunden werden, um eine Drehung der Spindelantriebswelle hervorzurufen, eine Steuereinrichtung (40) zum selektiven Zuführen eines Steuersignals an die Wicklungsansteuereinrichtung, das die Wicklungsansteuereinrichtung ansteuert und selektiv die Wicklungsansteuereinrichtung mit der Leistungsquelle koppelt, und eine Einrichtung (30; 134) zum Anlegen eines Bremssignals an die Wicklungsansteuereinrichtung einschließt, um ein dynamisches Bremsen der Spindelantriebswelle durch elektrisches Kurzschließen der Wicklungsteile zu bewirken,
dadurch gekennzeichnet, daß die Bremssignal-Zuführungseinrichtung (30; 134) darauf anspricht, daß die Drehgeschwindigkeit des Spindelantriebsmotors unter einen vorgegebenen Schwellenwertpegel absinkt, der so bestimmt ist, daß er zwischen einem ersten Pegel, der einen maximalen Stoßstrom darstellt, der die Wicklungsteile nicht beschädigt, und einen zweiten Pegel liegt, der eine minimale Plattendrehgeschwindigkeit darstellt, bei der der Kopf gegenüber der Platte fliegt, und daß Einrichtungen (137, 142) zum Halten der Wicklungsteile in elektrisch kurzgeschlossenem Zustand zum Aufrechterhalten einer dynamischen 5 Bremswirkung bei einem Leistungsausfall und Einrichtungen (36, 138) zum Rücksetzen der Halteeinrichtungen (132; 142) bei Wiederherstellung der System-Betriebsleistung vorgesehen sind, um das Anlegen des Bremssignals an die Wicklungsansteuereinrichtung aufzuheben und um die Ansteuerung der Wicklungsteile zur Drehung der Spindelantriebswelle zu ermöglichen.

2. Vorrichtung nach Anspruch 1,
bei der die Wicklungsansteuereinrichtung Transistoreinrichtungen (42 bis 52) einschließt.

3. Vorrichtung nach Anspruch 1 oder 2,
bei der die Bremssignal-Zuführungseinrichtung (134) einen Spannungsvergleicher (148) einschließt.

4. Vorrichtung nach Anspruch 1 oder 2,
bei der die Bremssignal-Zuführungseinrichtung (30) eine Schmitt-Triggerschaltung (100, 102) einschließt.

5. Vorrichtung nach Anspruch 1, 2, 3 oder 4,
bei der die Halteeinrichtung einen Kondensator (132, 142) einschließt.

6. Vorrichtung nach Anspruch 5,
bei der die Bremssignal-Zuführungseinrichtung Einrichtungen (38, 140) zum Abgeben von Ladung in den Haltekondensator (132, 142) einschließt.

7. Vorrichtung nach Anspruch 5 oder 6,
bei der die Rücksetzeinrichtung für die Halteeinrichtung Einrichtungen (116, 158) zum Ableiten von Ladung von dem Haltekondensator (132, 142) einschließt.

8. Vorrichtung nach Anspruch 7,
bei der die die Ladung ableitende Einrichtung einen Transistor (116, 158) einschließt.

9. Vorrichtung nach einem der vorhergehenden Ansprüche, bei der die Bremssignal-Zuführungseinrichtung (30; 34) auf die Spannung längs der Wicklungsteile (20A, 20B, 20C) anspricht, wobei die Spannung die Drehgeschwindigkeit des Spindelantriebsmotors (16) darstellt.

10. Verfahren zum Bremsen einer Speicherplatte (12) eines Speichersystems, das einen Kopf (14) und einen Spindelantriebsmotor (16) mit Wicklungsteilen (20A, 20B, 20C) und einer mit der Platte (12) gekoppelten Spindelantriebswelle einschließt, wobei das Verfahren das elektrische Kurzschließen der Wicklungsteile zum dynamischen Bremsen mit der Spindelantriebswelle umfaßt,
dadurch gekennzeichnet, daß die Drehgeschwindigkeit der Welle elektrisch festgestellt wird und daß bei einer Beseitigung der Leistungsversorgungsspannung ein Bremssignal zum dynamischen Bremsen freigegeben wird, wenn die Drehgeschwindigkeit unterhalb eines vorgegebenen Schwellenwertpegels liegt, der so vorherbestimmt ist, daß er zwischen einem ersten Pegel, der einen maximalen Stoßstrom darstellt, der die Wicklungsteile bei einem Kurzschluß nicht beschädigen würde, und einem zweiten Pegel liegt, der eine minimale Plattendrehgeschwindigkeit darstellt, die es dem Kopf ermöglicht, gegenüber der Platte zu fliegen, daß das Bremssignal gehalten wird, um ein dynamisches Bremsen aufrechtzuhalten, und daß das Halten bei Wiederherstellung der Leistung zurückgesetzt wird, um das Bremssignal aufzuheben und das dynamische Bremsen zu beenden.

## Revendications

1. Appareil pour freiner un disque de stockage (12) d'un système de stockage qui comprend une tête (14) et un moteur d'entraînement à broche (16) comportant des moyens formant bobine (20A, 20B et 20C) et un arbre moteur à broche (18) couplé au disque (12), des moyens d'excitation de bobine (42 à 78) couplés aux moyens formant bobine (20A, 20B et 20C), destinés à fournir de manière sélective de l'énergie aux moyens formant bobine en reliant électriquement, périodiquement, les moyens formant bobine à une source d'énergie afin de provoquer la rotation de l'arbre moteur à broche, des moyens de commande (40) pour fournir de manière sélective un signal de commande aux moyens d'excitation de bobine, qui alimentent les moyens d'excitation de bobine et couplent, de manière sélective, les moyens d'excitation de bobine à la source d'énergie, et des moyens (30 ; 134) pour appliquer un signal de freinage aux moyens d'excitation de bobine pour effectuer un freinage dynamique de l'arbre moteur à broche en court-circuitant électriquement les moyens formant bobine, caractérisé en ce que les moyens d'application de signal de freinage (30 ; 134) réagissent à la vitesse de rotation du moteur d'entraînement à broche lorsqu'elle tombe en dessous d'un niveau de seuil prédéterminé, qui est prédéterminé de façon à se trouver entre un premier niveau représentant un courant de choc maximum qui n'endommagera pas les moyens formant bobine et un deuxième niveau représentant une vitesse minimum de rotation de disque, à laquelle la tête flottera par rapport au disque et il est prévu des moyens (132, 142) pour maintenir les moyens formant bobine dans un état de court-circuit électrique, pour maintenir le freinage dynamique lors de la perte d'énergie, et des moyens (36 ; 138) pour remettre à l'état initial les moyens de maintien (132 ; 142) lors d'une restauration de l'alimentation du système afin d'éliminer l'application du signal de freinage aux moyens d'excitation de bobine et permettre l'alimentation des moyens formant bobine pour mettre en rotation l'arbre moteur à broche.

2. Appareil selon la revendication 1, dans lequel les moyens d'excitation de bobine comprennent des moyens formant transistor (42 à 52).

3. Appareil selon la revendication 1 ou 2, dans lequel les moyens d'application de signal de freinage (134) comprennent un comparateur de tension (148).

4. Appareil selon la revendication 1 ou 2, dans lequel les moyens d'application de signal de freinage (30) comprennent un circuit de bascule de Schmitt (100, 102).

5. Appareil selon la revendication 1, 2, 3 ou 4 dans lequel les moyens de maintien comprennent un condensateur (132, 142).

6. Appareil selon la revendication 5, dans lequel les moyens d'application de signal de freinage comprennent des moyens (38, 140) pour faire basculer une charge dans le condensateur de maintien (132, 142).

7. Appareil selon la revendication 5 ou 6, dans lequel les moyens de remise à l'état initial des moyens de maintien comprennent des moyens (116, 158) pour retirer la charge du condensateur de maintien (132, 142).

8. Appareil selon la revendication 7, dans lequel les moyens de retrait de charge comprennent un transistor (116, 158).

9. Appareil selon l'une quelconque des revendications précédentes, dans lequel les moyens d'application de signal de freinage (30; 34) réagissent à la tension aux bornes des moyens formant bobine (20A, 20B, 20C), la tension représentant la vitesse de rotation du moteur d'entraînement à broche (16).

10. Procédé pour freiner un disque de stockage (12) d'un système de stockage qui comprend une tête (14) et un moteur d'entraînement à broche (16) comportant des moyens formant bobine (20A, 20B, 20C) et un arbre moteur à broche couplé au disque (12), le procédé comprenant la mise en court-circuit électrique des moyens formant bobine pour freiner dynamiquement l'arbre moteur à broche, caractérisé par le fait de détecter électriquement la vitesse rotative de l'arbre et, lorsqu'il n'y a plus de tension d'alimentation, de permettre un signal de freinage pour un freinage dynamique quand la vitesse de rotation est inférieure à un niveau de seuil prédéterminé, qui est prédeterminé de façon à se trouver entre un premier niveau représentatif d'un courant de choc maximum qui n'endommagerait pas les moyens formant bobine lors de la mise en court-circuit, et un deuxième niveau représentant une vitesse minimum de rotation de disque qui permettrait à la tête de flotter par rapport au disque, maintenant le signal de freinage pour maintenir un freinage dynamique, et remettre à l'état initial les moyens de maintien lors d'une restauration de l'alimentation pour éliminer le signal de freinage et mettre fin au freinage dynamique.
